# EUROPEAN PATENT SPECIFICATION

(11) **EP 2 224 427 B1**
(45) Date of publication and mention of the grant of the patent: **14.11.2018**
(21) Application number: 09250572.6
(22) Date of filing: 27.02.2009
(51) Int. Cl.: G10L 13/04, G10L 15/26, G10L 21/06, G09B 21/00, H04M 3/42, H04M 1/247

(54) **Mobile wireless communications device for hearing and/or speech impaired user**
Mobile drahtlose Kommunikationsvorrichtung für einen hör- und/oder sprachgeschädigten Nutzer
Dispositif de communication sans fil mobile pour un utilisateur malentendant et/ou atteint de dysphonie

(43) Date of publication of application: 01.09.2010
(73) Proprietor: BlackBerry Limited, Waterloo, ON N2K 0A7 (CA)
(72) Inventor: Garg, Neeraj, Waterloo Ontario N2L 5Z5 (CA)
(74) Representative: Roberts, Gwilym Vaughan

(56) References cited:
- WO-A-01/69895
- GB-A- 2 183 880
- US-A- 4 414 431
- US-A- 5 982 853
- US-A- 5 995 590

## Description

### Technical Field

The present disclosure relates to the field of communications devices, and more particularly, to mobile wireless communications devices that can be used by hearing and/or speech impaired users.

### Background

Mobile wirelesses communications devices, such as cellular telephones, are now commonplace throughout the world. Most of these communications devices, however, are designed for users without hearing or speech impairments. When using a typical mobile wireless communications device in a normal phone conversation, both parties as sender and receiver must be able to hear and talk clearly. This causes a challenge for hearing impaired or speech challenged users. As society grows more complicated and interrelated, the needs of the handicapped, for example, the hearing impaired and/or speech challenged user, are increasingly being accommodated. One known system for accommodating a hearing impaired or speech challenged person uses a live agent as an intermediary, allowing the sender and caller to communicate to each other through this live agent. For example, the live agent receives text from a hearing impaired user and speaks to the other user, while receiving spoken voice from the other user. The live agent types text for the hearing impaired user and speaks text typed from that user to another. This is not an automatic process.

As voice-to-text technology evolves, for example, as associated with personal computers, the processing capability has increased such that it is possible to write down the spoken text in real-time using computer-based technologies and narrate a written text using computers. These technologies should be leveraged for use with mobile wireless communications devices as an aid for hearing or speech impaired people, thus eliminating the requirement for a live agent as a third party intermediary.

WO 01/69895 recites an arrangement using a telephone device with keyboard and display, which allows deaf-mutes to communicate by telephony without requiring operators or identical telephonic devices to be provided to the called person.

US 5995590 again discloses an arrangement using a separate keyboard or text entry, which is useful to hearing-impaired people.

GB 2 183 880 A, US 4,414,431 and US 5,982,853 disclose further devices which facilitate communicating for hearing- and/or speech-impaired people.

### Summary

A mobile wireless communications device includes a housing and transceiver carried by the housing for transmitting and receiving radio frequency (RF) signals carrying communications data of speech. A processor is coupled to the transceiver for processing the communications data as speech that is transmitted and received to and from the transceiver. A keyboard and display is carried by the housing and connected to the processor. A speech-to-text and text-to-speech module converts communications data as speech received from the transceiver to text that is displayed on the display and converting text that is typed by a user on the keyboard in the communications data as speech to be transmitted from the transceiver as an RF signal.

The display provides an interface and the processor is configured for displaying a set up screen having a handicap option that is user selected for enabling the speech-to-text and text-to-speech module. The handicap option includes a default setting in one aspect. The device configuration can, in one example, have a handicap option with the phone set-up such that it knows the current user cannot hear. Upon receiving an incoming call or communication, pressing the
receive button automatically invokes the handicap feature for speech-to-text and text-to-speech.

In another aspect, a speaker is carried by the housing and coupled to the processor for outputting audio speech received as communications data in addition to displaying the speech as text on the display. In yet another aspect, a key can be depressed in a telephone call that automatically generates a signal as communications data for speech indicative of a greeting in a telephone call. A key can be depressed that automatically generates a signal as communications data for speech indicative of ending a telephone call. In another aspect, a light emitting diode (LED) is carried by the housing and coupled to the processor, which is configured for generating a signal to the LED for activating the LED and displaying a light pattern indicative of speech. A plurality of LED's can be carried by the housing, each of a different color from another LED such that a color-coded light pattern is indicative of speech.

In yet another aspect, the speech-to-text and text-to-speech module is formed as a speech-to-text and text-to-speech processing circuit coupled to the processor. In yet another aspect, it is an application cooperating with operating software. The processor can be configured for converting speech to a virtual attendant displayed on the display that displays video of sign language patterns indicative of the received speech. A camera can be carried by the housing and coupled to the processor and configured for receiving images of a user allowing a user to transmit sign language video or view lips of a virtual attendant for lip reading. The display can also display different options for choosing LED patterns to be displayed or a virtual attendant.

A method aspect is also set forth.

### Brief Description of the Drawings

Other objects, features and advantages of the present invention will become apparent from the detailed description of the invention which follows, when considered in light of the accompanying drawings in which:
FIG. 1 is a block diagram of an example embodiment of a mobile device.
FIG. 2 is a block diagram of an example embodiment of a communication subsystem component of the mobile device of FIG. 1.
FIG. 3 is an example block diagram of a node of a wireless network.
FIG. 4 is a block diagram illustrating components of a host system in one example configuration for use with the wireless network of FIG. 3 and the mobile device of FIG. 1.
FIG. 5 is a block diagram of the example embodiment of the mobile device shown in FIG. 1 and showing greater details of other device subsystems that include a text-to-speech/speech-to-text converter module, LED module, and a video/webcam module that all operate in conjunction with the handicap module associated with the operating system.
FIG. 6 is a front elevation view of a mobile wireless communications device that incorporates the functional components shown in the block diagram of the mobile device in FIG. 5 and used with the hearing and/or speech impaired user.
FIG. 7 is a front elevation view of the mobile wireless communications device shown in FIG. 6 in which a set up wizard for a handicap option is displayed.
FIG. 8 is another front elevation view of the mobile wireless communications device similar to FIG. 7 and showing the various handicap options in the set up wizard for hearing and/or speech-impaired users.
FIG. 9 is a flowchart of an example method.

### Detailed Description

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limiting the scope of the example embodiments described herein.

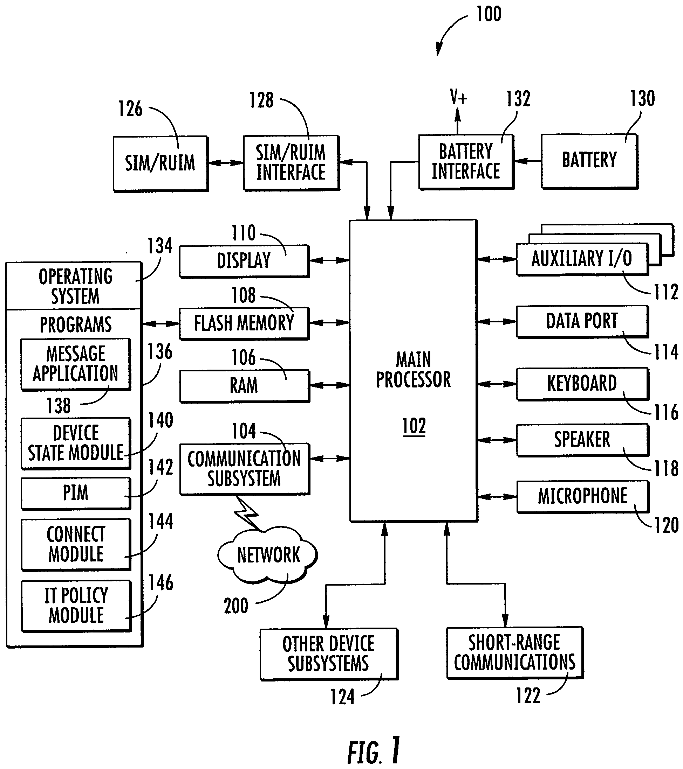

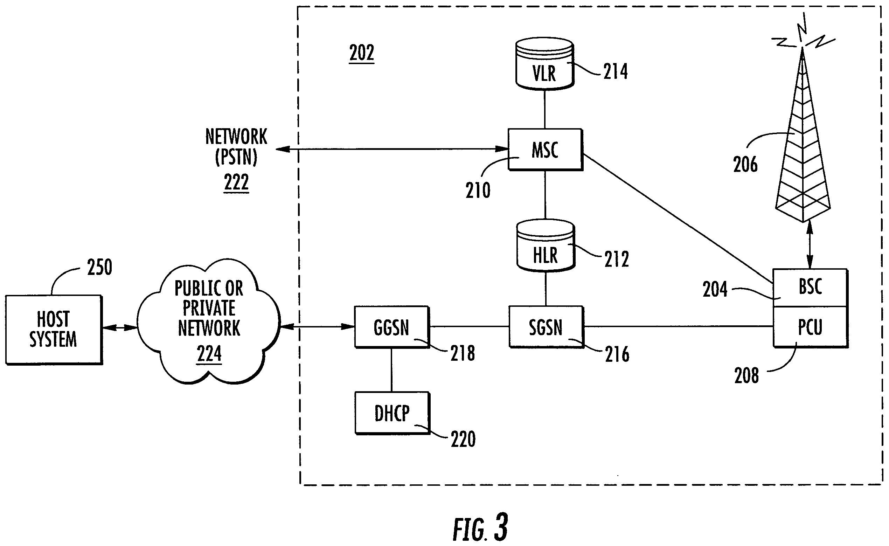

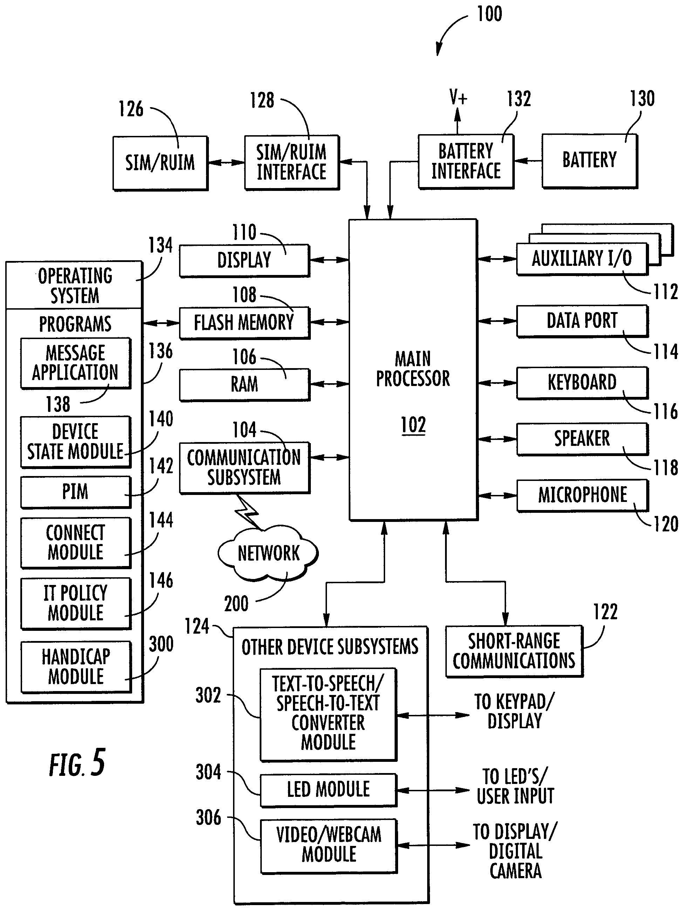

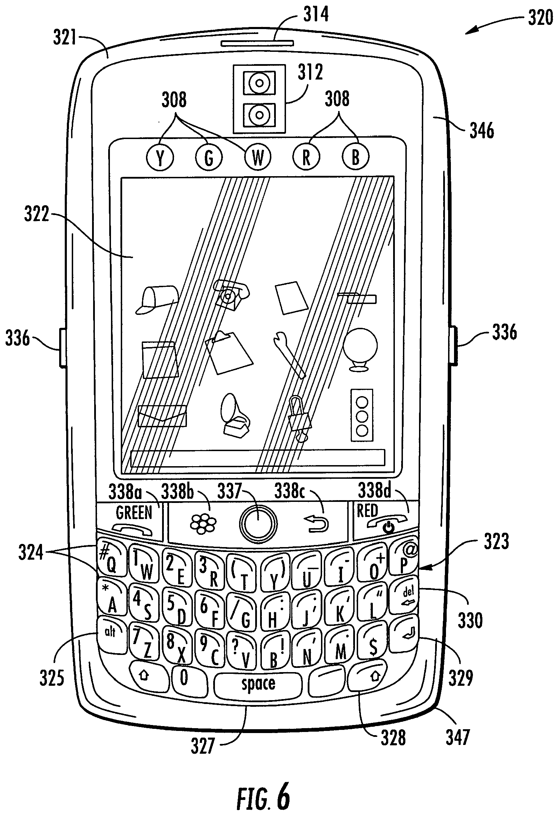

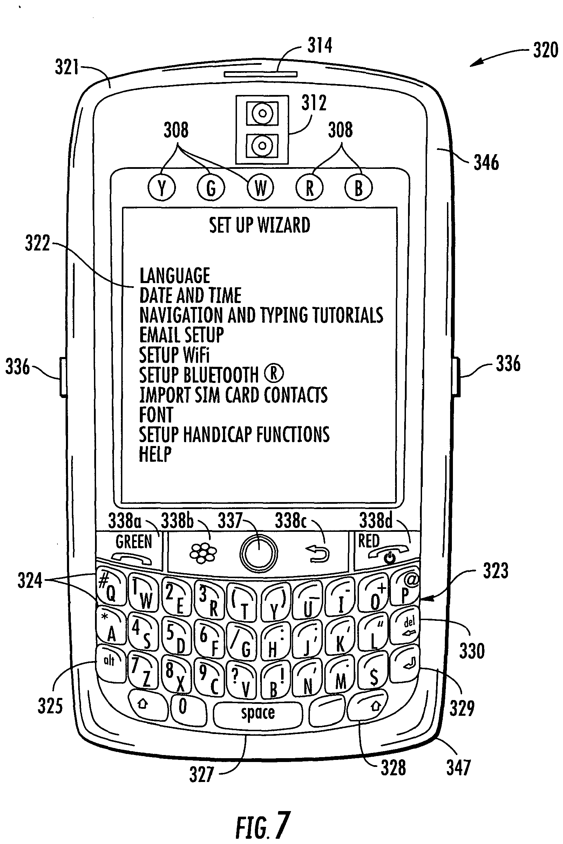

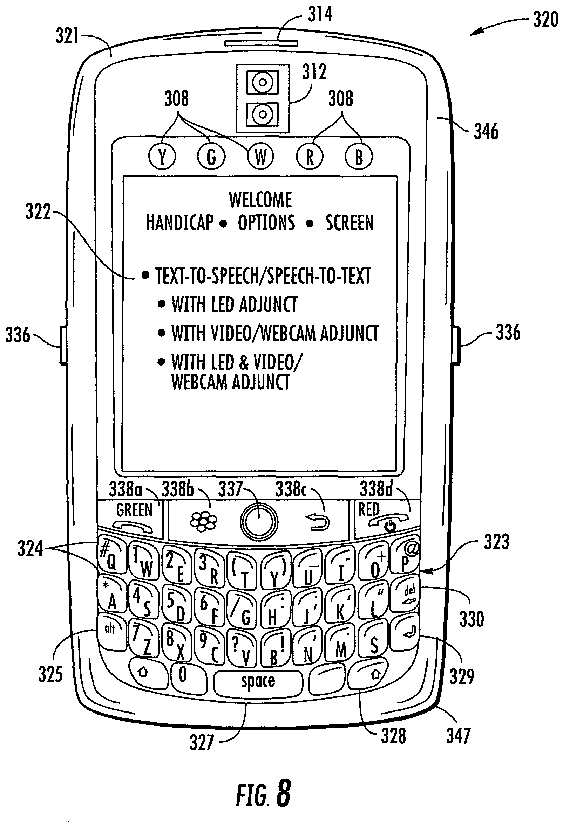

There now follows a description relative to FIGS. 1-4 of an example embodiment of a mobile device, such as a mobile wireless communications device shown in FIG. 6, communication subsystem component of the mobile device, a node in a wireless network that can be operable with the wireless device and components of a host system for use with the wireless network of FIG. 3 and the mobile device of FIG. 1. After a description of those components relative to FIGS. 1-4, a further description will follow of examples for a mobile wireless communications device that can be used by the hearing or speech-impaired and includes a handicap option as part of a set up wizard for a user interface. FIG. 5 shows the additional device subsystems for accommodating hearing and speech-impaired users. Menu options that are displayed in a set up wizard for hearing and speech-impaired users are illustrated with reference to FIGS. 7 and 8.

The example embodiments described herein generally relate to a mobile wireless communication device, hereafter referred to as a mobile device, which can be configured according to an IT policy. It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities). To aid the reader in understanding the structure of the mobile device and how it communicates with other devices and host systems, reference will now be made to FIGS. 1-4.

Referring first to FIG. 1, shown therein is a block diagram of an example embodiment of a mobile device **100.** The mobile device **100** includes a number of components such as a main processor **102** that controls the overall operation of the mobile device **100.** Communication functions, including data and voice communications, are performed through a communication subsystem **104.** The communication subsystem **104** receives messages from and sends messages to a wireless network **200.** In this example embodiment of the mobile device **100,** the communication subsystem **104** is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the example embodiments described herein are intended to use any other suitable standards that are developed in the future. The wireless link connecting the communication subsystem **104** with the wireless network **200** represents one or more different Radio Frequency (RF) channels, operating according to defined protocols specified for GSM/GPRS communications. With newer network protocols, these channels are capable of supporting both circuit switched voice communications and packet switched data communications.

Although the wireless network **200** associated with mobile device **100** is a GSM/GPRS wireless network in one example implementation, other wireless networks may also be associated with the mobile device **100** in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor **102** also interacts with additional subsystems such as a Random Access Memory (RAM) **106**, a flash memory **108**, a display **110**, an auxiliary input/output (I/O) subsystem **112**, a data port **114**, a keyboard **116**, a speaker **118**, a microphone **120**, short-range communications **122** and other device subsystems **124.**

Some of the subsystems of the mobile device **100** perform communication-related functions, whereas other subsystems may provide "resident" or on-device functions. By way of example, the display **110** and the keyboard **116** may be used for both communication-related functions, such as entering a text message for transmission over the network **200**, and device-resident functions such as a calculator or task list.

The mobile device **100** can send and receive communication signals over the wireless network **200** after required network registration or activation procedures have been completed. Network access is associated with a subscriber or user of the mobile device **100.** To identify a subscriber, the mobile device 100 requires a SIM/RUIM card **126** (i.e., Subscriber Identity Module or a Removable User Identity Module) to be inserted into a SIM/RUIM interface **128** in order to communicate with a network. The SIM card or RUIM **126** is one type of a conventional "smart card" that can be used to identify a subscriber of the mobile device **100** and to personalize the mobile device **100**, among other things. Without the SIM card **126**, the mobile device **100** is not fully operational for communication with the wireless network **200.** By inserting the SIM card/RUIM 126 into the SIM/RUIM interface **128**, a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM card/RUIM **126** includes a processor and memory for storing information. Once the SIM card/RUIM **126** is inserted into the SIM/RUIM interface **128**, it is coupled to the main processor **102.** In order to identify the subscriber, the SIM card/RUIM **126** can include some user parameters such as an International Mobile Subscriber Identity (IMSI). An advantage of using the SIM card/RUIM **126** is that a subscriber is not necessarily bound by any single physical mobile device. The SIM card/RUIM **126** may store additional subscriber information for a mobile device as well, including datebook (or calendar) information and recent call information. Alternatively, user identification information can also be programmed into the flash memory **108.**

The mobile device **100** is a battery-powered device and includes a battery interface **132** for receiving one or more rechargeable batteries **130.** In at least some example embodiments, the battery **130** can be a smart battery with an embedded microprocessor. The battery interface **132** is coupled to a regulator (not shown), which assists the battery **130** in providing power V+ to the mobile device **100.** Although current technology makes use of a battery, future technologies such as micro fuel cells may provide the power to the mobile device **100.**

The mobile device **100** also includes an operating system **134** and software components **136** to **146** which are described in more detail below. The operating system 134 and the software components **136** to **146** that are executed by the main processor **102** are typically stored in a persistent store such as the flash memory **108**, which may alternatively be a read-only memory (ROM) or similar storage element (not shown). Those skilled in the art will appreciate that portions of the operating system **134** and the software components **136** to **146**, such as specific device applications, or parts thereof, may be temporarily loaded into a volatile store such as the RAM **106.** Other software components can also be included, as is well known to those skilled in the art.

The subset of software applications **136** that control basic device operations, including data and voice communication applications, will normally be installed on the mobile device **100** during its manufacture. Other software applications include a message application **138** that can be any suitable software program that allows a user of the mobile device **100** to send and receive electronic messages. Various alternatives exist for the message application **138** as is well known to those skilled in the art. Messages that have been sent or received by the user are typically stored in the flash memory 108 of the mobile device **100** or some other suitable storage element in the mobile device **100.** In at least some example embodiments, some of the sent and received messages may be stored remotely from the device **100** such as in a data store of an associated host system that the mobile device **100** communicates with.

The software applications can further include a device state module **140**, a Personal Information Manager (PIM) **142**, and other suitable modules (not shown). The device state module **140** provides persistence, i.e. the device state module **140** ensures that important device data is stored in persistent memory, such as the flash memory **108**, so that the data is not lost when the mobile device **100** is turned off or loses power.

The PIM **142** includes functionality for organizing and managing data items of interest to the user, such as, but not limited to, email, contacts, calendar events, voice mails, appointments, and task items. A PIM application has the ability to send and receive data items via the wireless network **200.** PIM data items may be seamlessly integrated, synchronized, and updated via the wireless network **200** with the mobile device subscriber's corresponding data items stored and/or associated with a host computer system. This functionality creates a mirrored host computer on the mobile device **100** with respect to such items. This can be particularly advantageous when the host computer system is the mobile device subscriber's office computer system.

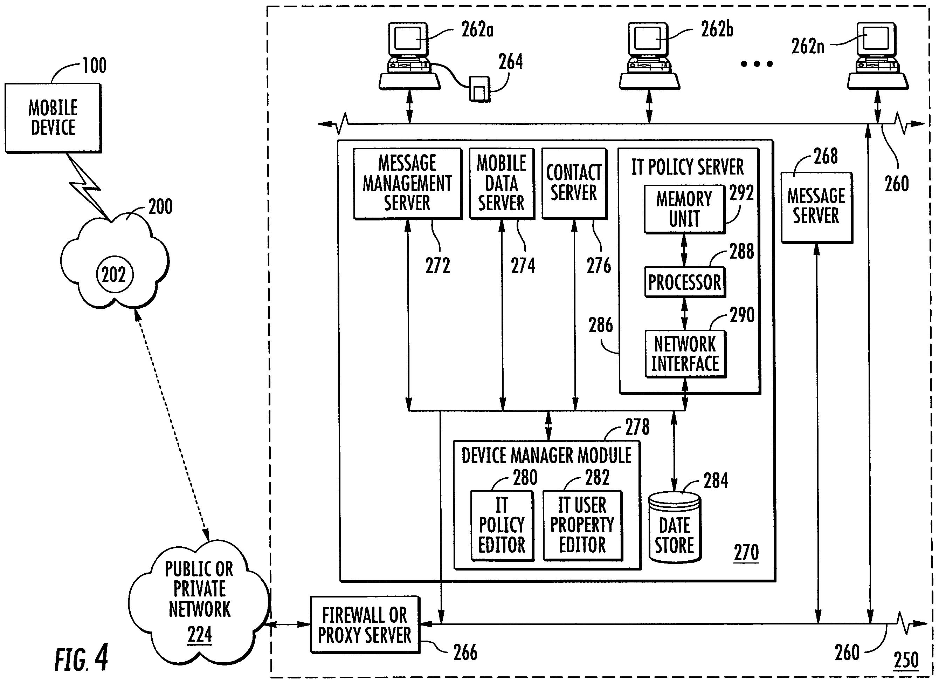

The mobile device **100** also includes a connect module **144**, and an IT policy module **146.** The connect module **144** implements the communication protocols that are required for the mobile device **100** to communicate with the wireless infrastructure and any host system, such as an enterprise system, that the mobile device **100** is authorized to interface with. Examples of a wireless infrastructure and an enterprise system are given in FIGS. 3 and 4, which are described in more detail below.

The connect module **144** includes a set of APIs that can be integrated with the mobile device **100** to allow the mobile device **100** to use any number of services associated with the enterprise system. The connect module **144** allows the mobile device **100** to establish an end-to-end secure, authenticated communication pipe with the host system . A subset of applications for which access is provided by the connect module **144** can be used to pass IT policy commands from the host system to the mobile device **100.** This can be done in a wireless or wired manner. These instructions can then be passed to the IT policy module **146** to modify the configuration of the device **100.** Alternatively, in some cases, the IT policy update can also be done over a wired connection.

The IT policy module **146** receives IT policy data that encodes the IT policy. The IT policy module **146** then ensures that the IT policy data is authenticated by the mobile device **100.** The IT policy data can then be stored in the flash memory **106** in its native form. After the IT policy data is stored, a global notification can be sent by the IT policy module **146** to all of the applications residing on the mobile device **100**. Applications for which the IT policy may be applicable then respond by reading the IT policy data to look for IT policy rules that are applicable.

The IT policy module **146** can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some example embodiments, the IT policy module **146** can determine which applications are affected by the IT policy data and send a notification to only those applications. In either of these cases, for applications that aren't running at the time of the notification, the applications can call the parser or the IT policy module **146** when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

After the IT policy rules have been applied to the applicable applications or configuration files, the IT policy module **146** sends an acknowledgement back to the host system to indicate that the IT policy data was received and successfully applied.

Other types of software applications can also be installed on the mobile device **100**. These software applications can be third party applications, which are added after the manufacture of the mobile device **100**. Examples of third party applications include games, calculators, utilities, etc.

The additional applications can be loaded onto the mobile device **100** through at least one of the wireless network **200**, the auxiliary I/O subsystem **112**, the data port 114, the short-range communications subsystem **122**, or any other suitable device subsystem **124**. This flexibility in application installation increases the functionality of the mobile device **100** and may provide enhanced on-device functions, communication-related functions, or both. For example, secure communication applications may enable electronic commerce functions and other such financial transactions to be performed using the mobile device **100**.

The data port **114** enables a subscriber to set preferences through an external device or software application and extends the capabilities of the mobile device **100** by providing for information or software downloads to the mobile device **100** other than through a wireless communication network. The alternate download path may, for example, be used to load an encryption key onto the mobile device **100** through a direct and thus reliable and trusted connection to provide secure device communication.

The data port **114** can be any suitable port that enables data communication between the mobile device **100** and another computing device. The data port **114** can be a serial or a parallel port. In some instances, the data port **114** can be a USB port that includes data lines for data transfer and a supply line that can provide a charging current to charge the battery **130** of the mobile device **100.**

The short-range communications subsystem **122** provides for communication between the mobile device **100** and different systems or devices, without the use of the wireless network **200.** For example, the subsystem **122** may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an email message, or web page download will be processed by the communication subsystem **104** and input to the main processor **102.** The main processor **102** will then process the received signal for output to the display **110** or alternatively to the auxiliary I/O subsystem **112.** A subscriber may also compose data items, such as email messages, for example, using the keyboard **116** in conjunction with the display **110** and possibly the auxiliary I/O subsystem **112.** The auxiliary subsystem **112** may include devices such as: a touch screen, mouse, track ball, infrared fingerprint detector, or a roller wheel with dynamic button pressing capability. The keyboard **116** is preferably an alphanumeric keyboard and/or telephone-type keypad. However, other types of keyboards may also be used. A composed item may be transmitted over the wireless network **200** through the communication subsystem **104.**

For voice communications, the overall operation of the mobile device **100** is substantially similar, except that the received signals are output to the speaker **118**, and signals for transmission are generated by the microphone **120.** Alternative voice or audio I/O subsystems, such as a voice message recording subsystem, can also be implemented on the mobile device **100.** Although voice or audio signal output is accomplished primarily through the speaker **118**, the display **110** can also be used to provide additional information such as the identity of a calling party, duration of a voice call, or other voice call related information.

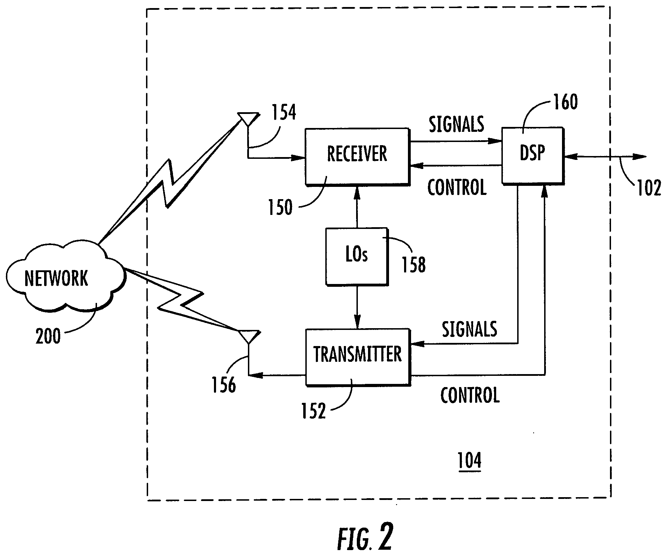

Referring now to FIG. 2, an example block diagram of the communication subsystem component **104** is shown. The communication subsystem **104** includes a receiver **150**, a transmitter **152**, as well as associated components such as one or more embedded or internal antenna elements **154** and **156**, Local Oscillators (LOs) **158**, and a processing module such as a Digital Signal Processor (DSP) **160**. The particular design of the communication subsystem **104** is dependent upon the communication network **200** with which the mobile device **100** is intended to operate. Thus, it should be understood that the design illustrated in FIG. 2 serves only as one example.

Signals received by the antenna **154** through the wireless network **200** are input to the receiver **150**, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP **160**. In a similar manner, signals to be transmitted are processed, including modulation and encoding, by the DSP **160**. These DSP-processed signals are input to the transmitter **152** for digital-to-analog (D/A) conversion, frequency up conversion, filtering, amplification and transmission over the wireless network **200** via the antenna **156.** The DSP **160** not only processes communication signals, but also provides for receiver and transmitter control. For example, the gains applied to communication signals in the receiver **150** and the transmitter **152** may be adaptively controlled through automatic gain control algorithms implemented in the DSP **160.**

The wireless link between the mobile device **100** and the wireless network **200** can contain one or more different channels, typically different RF channels, and associated protocols used between the mobile device **100** and the wireless network **200.** An RF channel is a limited resource that must be conserved, typically due to limits in overall bandwidth and limited battery power of the mobile device **100.**

When the mobile device **100** is fully operational, the transmitter **152** is typically keyed or turned on only when it is transmitting to the wireless network **200** and is otherwise turned off to conserve resources. Similarly, the receiver 150 is periodically turned off to conserve power until it is needed to receive signals or information (if at all) during designated time periods.

Referring now to FIG. 3, a block diagram of an example implementation of a node **202** of the wireless network **200** is shown. In practice, the wireless network **200** includes one or more nodes **202.** In conjunction with the connect module **144**, the mobile device **100** can communicate with the node **202** within the wireless network **200.** In the example implementation of FIG. 3, the node **202** is configured in accordance with General Packet Radio Service (GPRS) and Global Systems for Mobile (GSM) technologies. The node 202 includes a base station controller (BSC) **204** with an associated tower station **206**, a Packet Control Unit (PCU) **208** added for GPRS support in GSM, a Mobile Switching Center (MSC) **210**, a Home Location Register (HLR) **212**, a Visitor Location Registry (VLR) **214**, a Serving GPRS Support Node (SGSN) **216**, a Gateway GPRS Support Node (GGSN) **218**, and a Dynamic Host Configuration Protocol (DHCP) **220.** This list of components is not meant to be an exhaustive list of the components of every node **202** within a GSM/GPRS network, but rather a list of components that are commonly used in communications through the network **200.**

In a GSM network, the MSC **210** is coupled to the BSC **204** and to a landline network, such as a Public Switched Telephone Network (PSTN) **222** to satisfy circuit switched requirements. The connection through the PCU **208**, the SGSN **216** and the GGSN **218** to a public or private network (Internet) **224** (also referred to herein generally as a shared network infrastructure) represents the data path for GPRS capable mobile devices. In a GSM network extended with GPRS capabilities, the BSC **204** also contains the Packet Control Unit (PCU) **208** that connects to the SGSN **216** to control segmentation, radio channel allocation and to satisfy packet switched requirements. To track the location of the mobile device **100** and availability for both circuit switched and packet switched management, the HLR **212** is shared between the MSC **210** and the SGSN **216.** Access to the VLR **214** is controlled by the MSC **210.**

The station **206** is a fixed transceiver station and together with the BSC **204** form fixed transceiver equipment. The fixed transceiver equipment provides wireless network coverage for a particular coverage area commonly referred to as a "cell." The fixed transceiver equipment transmits communication signals to and receives communication signals from mobile devices within its cell via the station **206.** The fixed transceiver equipment normally performs such functions as modulation and possibly encoding and/or encryption of signals to be transmitted to the mobile device **100** in accordance with particular, usually predetermined, communication protocols and parameters, under control of its controller. The fixed transceiver equipment similarly demodulates and possibly decodes and decrypts, if necessary, any communication signals received from the mobile device **100** within its cell. Communication protocols and parameters may vary between different nodes. For example, one node may employ a different modulation scheme and operate at different frequencies than other nodes.

For all mobile devices **100** registered with a specific network, permanent configuration data such as a user profile is stored in the HLR **212.** The HLR **212** also contains location information for each registered mobile device and can be queried to determine the current location of a mobile device. The MSC **210** is responsible for a group of location areas and stores the data of the mobile devices currently in its area of responsibility in the VLR **214.** Further, the VLR 214 also contains information on mobile devices that are visiting other networks. The information in the VLR **214** includes part of the permanent mobile device data transmitted from the HLR **212** to the VLR **214** for faster access. By moving additional information from a remote HLR **212** node to the VLR **214**, the amount of traffic between these nodes can be reduced so that voice and data services can be provided with faster response times and at the same time requiring less use of computing resources.

The SGSN **216** and the GGSN **218** are elements added for GPRS support, namely packet switched data support, within GSM. The SGSN **216** and the MSC **210** have similar responsibilities within the wireless network **200** by keeping track of the location of each mobile device **100.** The SGSN **216** also performs security functions and access control for data traffic on the wireless network **200.** The GGSN **218** provides internetworking connections with external packet switched networks and connects to one or more SGSN's **216** via an Internet Protocol (IP) backbone network operated within the network **200.** During normal operations, a given mobile device **100** must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server **220** connected to the GGSN **218.** There are many mechanisms for dynamic IP assignment, including using a combination of a Remote Authentication Dial-In User Service (RADIUS) server and a DHCP server. Once the GPRS Attach is complete, a logical connection is established from a mobile device **100**, through the PCU **208**, and the SGSN **216** to an Access Point Node (APN) within the GGSN **218.** The APN represents a logical end of an IP tunnel that can either access direct Internet compatible services or private network connections. The APN also represents a security mechanism for the network 200, insofar as each mobile device **100** must be assigned to one or more APNs and mobile devices **100** cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network **200.** To maximize use of the PDP Contexts, the network **200** will run an idle timer for each PDP Context to determine if there is a lack of activity. When a mobile device **100** is not using its PDP Context, the PDP Context can be de-allocated and the IP address returned to the IP address pool managed by the DHCP server **220.**

Referring now to FIG. 4, shown therein is a block diagram illustrating components of an example configuration of a host system **250** that the mobile device **100** can communicate with in conjunction with the connect module **144.** The host system **250** will typically be a corporate enterprise or other local area network (LAN), but may also be a home office computer or some other private system, for example, in variant implementations. In this example shown in FIG. 4, the host system **250** is depicted as a LAN of an organization to which a user of the mobile device **100** belongs. Typically, a plurality of mobile devices can communicate wirelessly with the host system **250** through one or more nodes **202** of the wireless network **200.**

The host system **250** includes a number of network components connected to each other by a network **260.** For instance, a user's desktop computer **262a** with an accompanying cradle 264 for the user's mobile device **100** is situated on a LAN connection. The cradle **264** for the mobile device 100 can be coupled to the computer **262a** by a serial or a Universal Serial Bus (USB) connection, for example. Other user computers **262b-262n** are also situated on the network **260**, and each may or may not be equipped with an accompanying cradle **264.** The cradle **264** facilitates the loading of information (e.g., PIM data, private symmetric encryption keys to facilitate secure communications) from the user computer **262a** to the mobile device **100**, and may be particularly useful for bulk information updates often performed in initializing the mobile device **100** for use. The information downloaded to the mobile device **100** may include certificates used in the exchange of messages.

It will be understood by persons skilled in the art that the user computers **262a-262n** will typically also be connected to other peripheral devices, such as printers, etc. which are not explicitly shown in FIG. 4. Furthermore, only a subset of network components of the host system **250** are shown in FIG. 4 for ease of exposition, and it will be understood by persons skilled in the art that the host system **250** will comprise additional components that are not explicitly shown in FIG. 4 for this example configuration. More generally, the host system **250** may represent a smaller part of a larger network (not shown) of the organization, and may comprise different components and/or be arranged in different topologies than that shown in the example embodiment of FIG. 4.

To facilitate the operation of the mobile device **100** and the wireless communication of messages and message-related data between the mobile device **100** and components of the host system **250**, a number of wireless communication support components **270** can be provided. In some implementations, the wireless communication support components **270** can include a message management server **272**, a mobile data server **274**, a contact server **276**, and a device manager module **278.** The device manager module **278** includes an IT Policy editor **280** and an IT user property editor **282**, as well as other software components for allowing an IT administrator to configure the mobile devices **100.** In an alternative example embodiment, there may be one editor that provides the functionality of both the IT policy editor **280** and the IT user property editor **282.** The support components **270** also include a data store **284**, and an IT policy server **286.** The IT policy server 286 includes a processor **288**, a network interface 290 and a memory unit **292.** The processor **288** controls the operation of the IT policy server **286** and executes functions related to the standardized IT policy as described below. The network interface 290 allows the IT policy server **286** to communicate with the various components of the host system **250** and the mobile devices **100.** The memory unit **292** can store functions used in implementing the IT policy as well as related data. Those skilled in the art know how to implement these various components. Other components may also be included as is well known to those skilled in the art. Further, in some implementations, the data store **284** can be part of any one of the servers.

In this example embodiment, the mobile device **100** communicates with the host system **250** through node **202** of the wireless network **200** and a shared network infrastructure **224** such as a service provider network or the public Internet. Access to the host system **250** may be provided through one or more routers (not shown), and computing devices of the host system **250** may operate from behind a firewall or proxy server **266.** The proxy server **266** provides a secure node and a wireless internet gateway for the host system **250.** The proxy server **266** intelligently routes data to the correct destination server within the host system **250.**

In some implementations, the host system **250** can include a wireless VPN router (not shown) to facilitate data exchange between the host system **250** and the mobile device **100.** The wireless VPN router allows a VPN connection to be established directly through a specific wireless network to the mobile device **100.** The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device **100** are initially received by a message server **268** of the host system **250.** Such messages may originate from any number of sources. For instance, a message may have been sent by a sender from the computer **262b** within the host system **250**, from a different mobile device (not shown) connected to the wireless network **200** or a different wireless network, or from a different computing device, or other device capable of sending messages, via the shared network infrastructure **224**, possibly through an application service provider (ASP) or Internet service provider (ISP), for example.

The message server **268** typically acts as the primary interface for the exchange of messages, particularly email messages, within the organization and over the shared network infrastructure **224.** Each user in the organization that has been set up to send and receive messages is typically associated with a user account managed by the message server **268.** Some example implementations of the message server **268** include a Microsoft Exchange™ server, a Lotus Domino™ server, a Novell Groupwise™ server, or another suitable mail server installed in a corporate environment. In some implementations, the host system **250** may comprise multiple message servers **268.** The message server **268** may also be adapted to provide additional functions beyond message management, including the management of data associated with calendars and task lists, for example.

When messages are received by the message server **268**, they are typically stored in a data store associated with the message server **268.** In at least some example embodiments, the data store may be a separate hardware unit, such as data store **284**, that the message server **268** communicates with. Messages can be subsequently retrieved and delivered to users by accessing the message server **268.** For instance, an email client application operating on a user's computer **262a** may request the email messages associated with that user's account stored on the data store associated with the message server **268.** These messages are then retrieved from the data store and stored locally on the computer **262a.** The data store associated with the message server **268** can store copies of each message that is locally stored on the mobile device **100.** Alternatively, the data store associated with the message server **268** can store all of the messages for the user of the mobile device **100** and only a smaller number of messages can be stored on the mobile device **100** to conserve memory. For instance, the most recent messages (i.e., those received in the past two to three months for example) can be stored on the mobile device **100.**

When operating the mobile device **100**, the user may wish to have email messages retrieved for delivery to the mobile device **100.** The message application **138** operating on the mobile device **100** may also request messages associated with the user's account from the message server **268.** The message application **138** may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own email address, and messages addressed specifically to the mobile device **100** are automatically redirected to the mobile device **100** as they are received by the message server **268.**

The message management server **272** can be used to specifically provide support for the management of messages, such as email messages, that are to be handled by mobile devices. Generally, while messages are still stored on the message server **268**, the message management server **272** can be used to control when, if, and how messages are sent to the mobile device **100.** The message management server **272** also facilitates the handling of messages composed on the mobile device **100**, which are sent to the message server **268** for subsequent delivery.

For example, the message management server **272** may monitor the user's "mailbox" (e.g., the message store associated with the user's account on the message server **268**) for new email messages, and apply user-definable filters to new messages to determine if and how the messages are relayed to the user's mobile device **100.** The message management server **272** may also compress and encrypt new messages (e.g., using an encryption technique such as Data Encryption Standard (DES), Triple DES, or Advanced Encryption Standard (AES)) and push them to the mobile device **100** via the shared network infrastructure **224** and the wireless network 200. The message management server **272** may also receive messages composed on the mobile device **100** (e.g., encrypted using Triple DES), decrypt and decompress the composed messages, re-format the composed messages if desired so that they will appear to have originated from the user's computer **262a**, and re-route the composed messages to the message server **268** for delivery.

Certain properties or restrictions associated with messages that are to be sent from and/or received by the mobile device **100** can be defined (e.g., by an administrator in accordance with IT policy) and enforced by the message management server **272.** These may include whether the mobile device **100** may receive encrypted and/or signed messages, minimum encryption key sizes, whether outgoing messages must be encrypted and/or signed, and whether copies of all secure messages sent from the mobile device **100** are to be sent to a pre-defined copy address, for example.

The message management server **272** may also be adapted to provide other control functions, such as only pushing certain message information or pre-defined portions (e.g., "blocks") of a message stored on the message server **268** to the mobile device **100.** For example, in some cases, when a message is initially retrieved by the mobile device **100** from the message server **268**, the message management server **272** may push only the first part of a message to the mobile device **100,** with the part being of a pre-defined size (e.g., 2 KB). The user can then request that more of the message be delivered in similar-sized blocks by the message management server **272** to the mobile device **100**, possibly up to a maximum predefined message size. Accordingly, the message management server **272** facilitates better control over the type of data and the amount of data that is communicated to the mobile device **100**, and can help to minimize potential waste of bandwidth or other resources.

The mobile data server **274** encompasses any other server that stores information that is relevant to the corporation. The mobile data server **274** may include, but is not limited to, databases, online data document repositories, customer relationship management (CRM) systems, or enterprise resource planning (ERP) applications.

The contact server **276** can provide information for a list of contacts for the user in a similar fashion as the address book on the mobile device **100.** Accordingly, for a given contact, the contact server **276** can include the name, phone number, work address and email address of the contact, among other information. The contact server **276** can also provide a global address list that contains the contact information for all of the contacts associated with the host system **250.**

It will be understood by persons skilled in the art that the message management server **272**, the mobile data server **274**, the contact server **276**, the device manager module **278**, the data store **284** and the IT policy server **286** do not need to be implemented on separate physical servers within the host system **250.** For example, some or all of the functions associated with the message management server **272** may be integrated with the message server **268**, or some other server in the host system **250.** Alternatively, the host system **250** may comprise multiple message management servers **272**, particularly in variant implementations where a large number of mobile devices need to be supported.

Alternatively, in some example embodiments, the IT policy server **286** can provide the IT policy editor **280**, the IT user property editor **282** and the data store **284.** In some cases, the IT policy server **286** can also provide the device manager module **278.** The processor **288** of the IT policy server **286** can be used to perform the various steps of a method for providing IT policy data that is customizable on a per-user basis. The processor **288** can execute the editors **280** and **282.** In some cases, the functionality of the editors **280** and **282** can be provided by a single editor. In some cases, the memory unit 292 can provide the data store **284.**

The device manager module **278** provides an IT administrator with a graphical user interface with which the IT administrator interacts to configure various settings for the mobile devices **100.** As mentioned, the IT administrator can use IT policy rules to define behaviors of certain applications on the mobile device **100** that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g., encryption algorithms, password rules, etc.), specifying themes or applications that are allowed to run on the mobile device **100**, and the like.

FIG. 5 is a block diagram showing functional components of the mobile wireless communications device similar to that shown in FIG. 1, but also showing added components with functionality that can be used as a handicap option. The mobile wireless communications device can be used by hearing and/or speech-impaired users in accordance with a non-limiting aspect. For this description of the handicap options and functional components, including a user interface as a set up wizard, reference numerals begin in the 300 series.

As shown in FIG. 5, the software operating system **134** works in conjunction with different software programs **136**, which can include a handicap module **300** as a software program that operates with various components as part of the other added device subsystems **124.** These subsystems can include a text-to-speech/speech-to-text converter module **302** that interoperates with the keyboard **116** and display such as part of the auxiliary I/O **112.** A light emitting diode (LED) module **304** interoperates with LED's positioned on the front of the mobile wireless communications device such as explained later with reference to FIG. 6. A video/webcam module **306** interoperates with the display and digital camera device (as part of auxiliary I/O **112**) positioned on the front of the mobile wireless communications device explained below relative to FIG. 6. It should be understood that each of the modules **302**, **304**, **306** can be separate processors or a sub-unit of the main processor **302**, an application software module as associated with the operating software, part of a handicap module **300** or any combination.

The handicap module **300** can incorporate software code from different operating software, including C++ for code. The handicap module **300** and device subsystem **124** operate together to facilitate a phone conversation for hearing impaired and/or speech challenged users. In the example embodiment shown in FIG. 5, any received phone call can be translated within the mobile wireless communications device and text displayed, enabling a speech-impaired user to read a voice conversation. In response, the user can type text that is converted to communications data as voice and transmitted on an RF signal back to the other user at a remote location such as another user in a phone conversation. This is especially relevant when the hearing impaired user is also speech impaired, making a response difficult. As an adjunct to the text-to-speech/speech-to-text conversion, it is possible to activate the LED module **304** such that LED's positioned on the front cover of the mobile wireless communications device would display lights indicative of speech, for example, as a pattern similar to Morse code. Not only could text be displayed, but also lights turned on or off indicative of a certain pattern of speech. Different colors could be used. Also, the main processor **102** and other device subsystems **124** could process the speech-to-text conversion to display lights in a certain pattern such as Morse code to assist the hearing impaired. A button as an input such as a track ball could be pressed for transmitting Morse code type signals or similar signals indicate of voice in addition to transmitting letters, which are displayed on the screen. For example, while text is being typed, light emitting diodes could blink in a pattern indicative of the letters or words being typed to assist the user.

The video/webcam module **306** interoperates with the display and digital camera (shown and explained in greater detail in FIG. 6) such that a user can receive text that had been processed in the text-to-speech/speech-to-text converter module **302.** The user holds the mobile wireless communications device somewhat parallel to their body and engages in sign language communication that can be transmitted as video back to another user.

The mobile wireless communications device overcomes the drawbacks of known services for deaf and hard-of-hearing individuals that use a relay system that allows a user to contact a communication assistant via an application that is typically downloaded into the mobile wireless communications device. In that system, a user provides a contact number for a desired hearing-able, human agent contact and communicates with this human agent contact via a "chat" screen into which the user can type their messages. The communication assistant relays messages to their destination and transfers the contact's response back to text to the hard-of-hearing user via the "chat" screen, thus, establishing two-way, text-to-speech and speech-to-text communication. The mobile wireless communications device as described relative to FIGS. 1-5 and FIGS. 6-8 obviates the necessity for using a third party communication assistant as a live person agent and the process is instead automated.

It is possible for some of the functionality as described to be implemented on the server side instead of the mobile wireless communications device as described relative to FIG. 5. For example, some of the processing such as shown in the other device subsystems **124** of FIG. 5, for example, the text-to-speech/speech-to-text converter module **302**, LED module **304**, and video/webcam module **306** could be implemented in the server side, for example, within a node **202** as shown in FIG. 3. An example could be software functionality or system circuitry incorporated in the MSC **210** or BSC **204** as non-limiting examples.

It should be understood that hearing impaired people can communicate using many mechanisms such as "reading text," reading lips, and visualizing changes to light patterns. The system and mobile wireless communications device as described encompasses these mechanisms. The hearing impaired person does not need to be initiating the call and the mobile wireless communications device through its set up wizard or preprogramming is aware that the owner is hearing impaired.

For example, a setting inside the phone such as part of the software operating system in conjunction with the handicap module **306** could indicate the physical challenges the owner may have. In accordance with the specific other device subsystems **124** and the special hardware circuits or modules, the mobile wireless communications device could have special circuitry adapted for specific users that are handicapped with any physical challenges, such as being hearing impaired and/or speech challenged. For those that have difficulty seeing and hearing, the use of the light emitting diodes positioned on the front cover of the mobile wireless communications device would be helpful in conjunction with the text-to-speech/speech-to-text implementation.

FIG. 6 shows a detailed view of a mobile wireless communications device **320** as a non-limiting example and shows five light emitting diodes **308** positioned above the display as a yellow, green, white, red and blue LED's and referred to by the initials Y, G, W, R and B and connected to the processor **102** and module **304.** A digital camera **312** is positioned above the display **322** as illustrated and could be similarly formed as a camera that typically is positioned on the rear surface (not shown) of the mobile wireless communications device **320** that is used for taking pictures and video images and using the display **322** as a view finder. The camera **312** is connected to the processor **102** in this example and to module **306.**

A brief description will now proceed relative to FIG. 6, which shows an example of the mobile wireless communications device **320**, for example, a handheld portable radio device, which can incorporate as non-limiting examples the various mobile device circuits of the mobile device described above relative to FIGS. 1-5.

Referring now to FIG. 6, an example of the mobile wireless communications device **320** illustratively includes a housing **321** having an upper portion **346** and a lower portion **347**, and typically carries a dielectric substrate, i.e., circuit board (not shown), such as a conventional printed circuit board (PCB) substrate. The circuit board can be any dielectric substrate, PCB, ceramic substrate or other circuit carrying structure for carrying signal circuits and electronic components within the mobile wireless communications device **320.** The illustrated housing **321** is typically a static housing, for example, as opposed to a flip or sliding housing, which is used in many similar mobile devices and cellular telephones. However, these flip and sliding and other housing configurations may also be used.

Circuitry as described relative to the mobile device description in FIGS. 1-5 is carried by the circuit board. It should be understood that any keyboard circuitry could be on a separate keyboard, etc., as will be appreciated by those skilled in the art. A battery (not shown) is also preferably carried by the housing **121** for supplying power to any circuitry. The circuit board typically carries a main antenna (not shown) at the lower end of the housing. It could carry other antennae such as a diversity antenna at the upper end of the housing or at other locations.

Furthermore, an audio output transducer **314** (e.g., a speaker) is carried by an upper portion **346** of the housing **121** and connected to the internal circuitry. One or more user input interface devices, such as a keypad (keyboard) **323** is also preferably carried by the housing **321** and connected to the internal circuitry. The term keypad **323** as used herein also refers to the term keyboard, indicating the user input devices having lettered and/or numbered keys commonly known and other example embodiments, including multi-top or predictive entry modes as shown in this example. Other examples of user input interface devices include a track ball **337** and convenience keys **336**, which could be positioned on the left and right sides of the housing. Around the track ball **337** are positioned other user input keys such as the green send (or receive) key **338a**, menu key **338b**, escape key **338c**, and the red end/power key **338d.** In one example, upon receiving an incoming call or communication, when the handicapped user presses the green send (or receive) key, the device automatically invokes the handicap feature for speech-to-text and text-to-speech. Of course, it will be appreciated that other user input interface devices (e.g., a stylus or touch screen interface) may be used in other example embodiments. Other input interface devices could be used, for example, a mute/standby key, volume key or other menu key. The housing could incorporate headset pads, USB ports, media card slots and other similar keys or inputs.

Another antenna such as a diversity antenna or a WiFi or WLAN (e.g., Bluetooth, IEEE 802.11) antenna can provide WLAN communication capabilities and/or a satellite positioning system (e.g., GPS, Galileo, etc.) antenna for providing position location capabilities, as will be appreciated by those skilled in the art. Other examples of auxiliary I/O devices **112** in FIG. 1 and described before could include the audio output transducer **314** (e.g., a speaker for speaker phone operation), and another digital camera lens (not shown) positioned on the rear surface of the device for providing digital camera capabilities to a user such as when photographing events or people and using the display as a viewer, an electrical device connector (e.g., USB, headphone, secure digital (SD) or memory card, etc.).

It should be noted that the term "input/output" as used herein for the auxiliary I/O device(s) means that such devices may have input and/or output capabilities, and they need not provide both in all example embodiments. That is, devices such as camera lenses may only receive an optical input, for example, while a headphone jack may only provide an audio output.

The mobile wireless communications device **320** further includes the display **322** as noted before, for example, a liquid crystal display (LCD) carried by the housing **321** and connected to the internal circuitry described relative to FIGS. 1-5, and more particularly, to the processor **102** and modules **302** and **306.** Convenience keys **336** and the track ball **337** can also be connected to the internal circuitry for allowing a user to navigate menus, text, etc., as will be appreciated by those skilled in the art. The track ball **337** may also be referred to as a "thumb wheel" or a "track wheel" in some instances and positioned in different locations depending on mobile device design. The keypad **323** is typically connected to the processor **102** and module **302** and **304** illustratively includes a plurality of multi-symbol keys **324** each having indicia of a plurality of respective symbols thereon. The keypad **323** also illustratively includes an alternate function key **325**, a space key **327**, a shift key **328**, a return (or enter) key **329**, and a backspace/delete key **330.** Other keys are also illustrated.

As seen in FIG. 6, the multi-symbol keys **324** are arranged in the rows on the keypad **323.** Furthermore, the letter symbols on each of the keys **324** are arranged to define a QWERTY layout. That is, the letters on the keypad **323** are presented in a three-row format, with the letters of each row being in the same order and relative position as in a standard QWERTY keypad. Each row of keys can be arranged in columns.

Accordingly, the mobile wireless communications device **120** as described may advantageously be used not only as a traditional cellular phone, but it may also be conveniently used for sending and/or receiving data over a cellular or other network, such as Internet and email data, for example as explained above relative to FIGS. 1-5. Of course, other keypad configurations may also be used in other example embodiments. Multi-tap or predictive entry modes may be used for typing emails, etc. as will be appreciated by those skilled in the art.

The mobile wireless communications device shown in FIG. 6 and described relative to FIGS. 1-5 can incorporate email and messaging accounts and provide different functions such as composing email, PIN messages, and SMS messages as described above relative to FIGS. 1-5. The device **302** can manage messages through an appropriate menu that can be retrieved by choosing various icons, for example, a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

With the circuitry as described relative to FIGS. 1-5, the mobile wireless communications device **320** can be aware that the owner (or user) is hearing impaired such as when a wizard set up menu is established and the phone (or mobile device) is set up for a specific handicapped or hearing impaired individual. As an example, for the incoming phone call, for example, the green send button **338a** can automatically enable speech-to-text behavior. For example, when the green send button **338a** is pressed for answering an initial phone call and the user is hearing impaired, the phone can be programmed through the handicap module **300** or other module **302** to send automatically a greeting such as "hello." When the red end button **338d** is depressed after a phone conversation is ended, a "thank you" could be sent. This could be advantageous when a handicapped user does not want to allow the initiator of a phone call on the other end to know that the one user is handicapped. Of course, the user would have to be a fast typist in order to make any conversation sound plausible as if the handicapped user were not handicapped. Also, the communication system would have to be bidirectional to allow intermixed conversation even when text is being typed and voice is passing from the other user and being converted into text.

All incoming calls can automatically be displayed in text format. Two-way communication such as speech-to-text on the hearing-impaired person's side or text-to-speech on the non-challenged person's side works automatically. It is possible to support full conference calling abilities and call waiting abilities. If multiple people are talking to a hearing impaired person, the mobile wireless communications device **320** can handle the calls automatically. It should be understood that the mobile wireless communications device **320** is not strictly limited to text. Every challenged person can have their own strengths and one challenged person can configure their phone to use a "text" option while others could prefer to read lips where a virtual person speaks the conversation on the device display **322**, thereby allowing the person who reads lips to use the phone as well. A virtual person could display sign language also. This could be an adjunct to text-to-speech and speech-to-text conversion capability in which not only could various words be displayed, but also a virtual person would display lips as a help aid. Other users could prefer light pattern changes with the multiple LED's **308** in the mobile wireless communications device. The LED's **308** could change light or color patterns for hearing impaired persons such as giving specific color patterns or Morse code signals. Morse code is relatively easy and speech could be converted to text and/or Morse code signals as an aid.

Because phones have digital cameras, an individual could speak to a hearing impaired person using video webcam capabilities, thereby allowing the hearing impaired person to read lips such as with video conferencing capabilities or see hang sign language patterns. To accomplish this, the mobile wireless communications device of a non-challenged person could inform the owner that the other end is hearing impaired and has requested lip-reading or hand sign language patterns. A webcam or other video camera could automatically turn on and enable the communication. As an adjunct to this, it is possible to have real-time interpretation of sign language capabilities. Part of an engine as the video/webcam circuit **306** could convert speech to sign language or a pair of lips displayed using the virtual person as described before or convert sign language speech in real-time.

FIGS. 6 and 7 are non-limiting examples of how an interface and set up wizard could be used for enabling a phone in a specific manner for a handicapped or challenged individual. Also, the device **320** could be implemented to default to various handicap options. For example, the track ball **337** could be pressed to enable certain graphical items to be selected on the display **322** as a graphical user interface and a set up wizard as shown in FIG. 7, having different options as non-limiting examples to be selected and allow set up of a preferred handicap function for a hearing impaired and/or speech impaired user. For example, the second to last option before the help option as shown in FIG. 7 is a set up handicap option that could be selected. In response to selecting the set up handicap option in FIG. 7, a welcome screen could be displayed for the handicap set up and various options displayed such as the text-to-speech/speech-to-text option with an adjunct that could be selected such as the LED assist and video/webcam circuitry enabled and as described above.

It should be understood that different synthesized speech and converter circuits can be used. A database could also be used to store sounds and words to assist in increasing the processing speed. The processor could be capable of processing received communications data as voice and determining if voice quality is good or if voice quality is difficult to understand and convert to text and turn the module **302** on or off as necessary. It is possible to generate voice extensible mark-up language (XML) data based on content that can be later transformed to speech. Speech synthesizer instructions could use packet technology. The processor could process packets and adjust fragmentation as necessary.

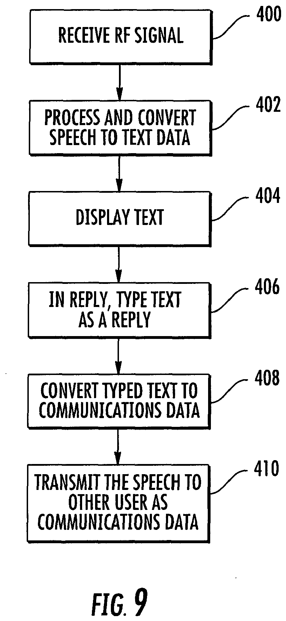

FIG. 9 shows a method of communicating. A mobile wireless communications device receives a radio frequency (RF) signal carrying communications data of speech from another user operating a communications device (Block 400). The communications data of speech is processed and converted to text data (Block 402). The text is displayed on a display of the communications device (Block 404). In reply to the displayed text corresponding to the speech of the other user, text is typed as a reply (Block 406). The typed text is converted to communications data of speech (Block 408). The communications data of speech is transmitted to the other user operating a communications device (Block 410).

Many modifications and other example embodiments of the invention will come to the mind of one skilled in the art having the benefit of the teachings presented in the foregoing descriptions and the associated drawings. Therefore, it is understood that the invention is not to be limited to the specific example embodiments disclosed, and that modifications and example embodiments are intended to be included within the scope of the appended claims.

## Claims

1. A mobile wireless communications device, comprising:
a transceiver for transmitting and receiving radio frequency, RF, signals carrying communications data of speech;
a main processor coupled to the transceiver for processing the communications data as speech that is transmitted and received to and from the transceiver;
a keyboard and display and connected to the main processor;
a text-to-speech/speech-to-text convertor module for converting communications data as speech received from the transceiver to text that is displayed on the display and converting text that is typed by a user at the keyboard into communications data of speech to be transmitted from the transceiver on an RF signal; and
a handicap module including an adjunct comprising at least a light emitting diode, LED, module connected to the main processor configured to supplement the text-to-speech/speech-to-text conversion; in which the LED module interoperates with LEDs positioned on the front of the mobile wireless communications device; and in which the LEDS are coupled to the main processor and the main processor is arranged to processes the speech-to-text conversion to display lights in a pattern indicative of the received speech.

2. The mobile wireless communications device according to Claim 1, wherein said display provides an interface and said processor is configured for displaying a set up screen having a handicap option that is user-selectable for enabling the text-to-speech/speech-to-text module.

3. The mobile wireless communications device according to Claim 1, and further comprising a speaker and coupled to the processor for outputting as an audio signal the speech contained in the received communications data of speech in addition to displaying the received speech as text on the display.

4. The mobile wireless communications device according to Claim 1, and further comprising a key, that when depressed by the user, is configured to generate a signal as communications data for speech indicative of a greeting in a telephone call and a key that is depressed that automatically generates a signal as communications data for speech indicative of ending a telephone call.

5. The mobile wireless communications device according to Claim 1, wherein said text-to-speech/speech-to-text converter module comprises a text-to-speech/speech-to-text processing circuit coupled to the main processor.

6. The mobile wireless communications device according to Claim 1, wherein said text-to-speech/speech-to-text module comprises an application cooperating with operating software.

7. The mobile wireless communications device according to Claim 1, wherein said main processor is configured for converting speech to a virtual attendant displayed on the display that displays video of sign language patterns or lips indicative of the received speech.

8. The mobile wireless communications device according to Claim 1, and further comprising a camera and coupled to the main processor and configured for receiving images of a user allowing a user to transmit sign language video.

9. A method of communicating, comprising:
receiving at a mobile wireless communications device a radio frequency, RF, signal carrying communications data of speech from another user operating a communications device;
processing the communications data of speech and converting the speech to text data;
displaying the text on a display of the mobile wireless communications device;
in reply to the displayed text corresponding to the speech of the other user, the user of the mobile wireless communications device typing text as a reply;
converting the typed text to communications data of speech;
transmitting the communications data of speech to the other user operating a communications device; and
configuring an adjunct of a handicap module comprised in the mobile wireless communications device, the adjunct comprising at least a light emitting diode, LED, module to supplement the text-to-speech/speech-to-text conversion, in which the LED module interoperates with LEDs positioned on the front of the mobile wireless communications device, the method further comprising:
processing the speech-to-text conversion to display lights in a pattern indicative of the received speech.

10. The method according Claim 9, and further comprising interfacing with a display screen having a handicap option for enabling the text-to-speech/speech-to-text conversion.

11. The method according Claim 9, and further comprising depressing a key when answering that automatically generates a signal as communications data for speech indicative of a greeting and depressing a key when ending a call that automatically generates a signal as communications data for received speech indicative of ending a telephone call.

12. The method according Claim 9, and further comprising displaying different colors from the LEDs indicative of received speech.

13. The method according to Claim 9, and further comprising displaying a virtual attendant on a display screen that displays sign language patterns or lips indicative of received speech.

## Patentansprüche

1. Mobile drahtlose Kommunikationsvorrichtung, umfassend:
einen Sender-Empfänger zum Senden und Empfangen von Hochfrequenz-, HF-Signalen, die Kommunikationsdaten von Sprache enthalten;
einen mit dem Sender-Empfänger gekoppelten Hauptprozessor zur Verarbeitung der Kommunikationsdaten als Sprache, die zu und von dem Sender-Empfänger übertragen und empfangen wird;
eine Tastatur und ein Display und verbunden mit dem Hauptprozessor;
ein Text-zu-Sprache/Sprache-zu-Text-Wandlermodul zum Umwandeln von Kommunikationsdaten, die von dem Sender-Empfänger empfangen werden, in Text, der auf der Anzeige angezeigt wird, und zum Umwandeln von Text, der von einem Benutzer an der Tastatur eingegeben wird, in Kommunikationsdaten von Sprache, die von dem Sender-Empfänger auf einem HF-Signal übertragen werden sollen; und
ein Behindertenmodul mit einem Zusatz, der mindestens ein Leuchtdioden-LED-Modul, das mit dem Hauptprozessor verbunden ist, das zum Erweitern der Text-zu-Sprache/Sprach-zu-Text-Umwandlung ausgelegt ist; bei dem das LED-Modul mit LEDs zusammenwirkt, die auf der Vorderseite der mobilen drahtlosen Kommunikationsvorrichtung angeordnet sind; und bei dem die LEDs mit dem Hauptprozessor gekoppelt sind und der Hauptprozessor zum Verarbeiten der Sprach-zu-Text-Umwandlung zum Anzeigen von Leuchten in einem Muster angeordnet ist, das für die empfangene Sprache kennzeichnend ist.

2. Mobile drahtlose Kommunikationsvorrichtung nach Anspruch 1, wobei die Anzeige eine Schnittstelle bereitstellt und der Prozessor zum Anzeigen eines Einrichtungsbildschirms mit einer Behindertenoption ausgelegt ist, die vom Benutzer wählbar ist, um das Text zu Sprache / Sprache zu Textmodul zu aktivieren.

3. Mobile drahtlose Kommunikationsvorrichtung nach Anspruch 1, ferner umfassend einen Lautsprecher und gekoppelt mit dem Prozessor zum Ausgeben der in den empfangenen Kommunikationsdaten von Sprache enthaltenen Sprache als Audiosignal zusätzlich zum Anzeigen der empfangenen Sprache als Text auf der Anzeige.

4. Die mobile drahtlose Kommunikationsvorrichtung nach Anspruch 1, ferner umfassend eine Taste, die, wenn sie vom Benutzer gedrückt wird, zum Erzeugen eines Signals als Kommunikationsdaten für Sprache ausgelegt ist, die für eine Begrüßung in einem Telefonat kennzeichnend sind, und eine Taste, die gedrückt wird, die automatisch ein Signal als Kommunikationsdaten für Sprache erzeugt, das für das Beenden eines Telefonats kennzeichnend ist.

5. Mobile drahtlose Kommunikationsvorrichtung nach Anspruch 1, wobei das Text-zu-Sprache/Sprache-zu-Text-Wandlermodul eine mit dem Hauptprozessor gekoppelte Text-zu-Sprache/Sprache-zu-Text-Verarbeitungsschaltung umfasst.

6. Mobile drahtlose Kommunikationsvorrichtung nach Anspruch 1, wobei das Text-zu-Sprache/Sprache-zu-TextModul eine Anwendung umfasst, die mit einer Betriebssoftware zusammenwirkt.

7. Mobile drahtlose Kommunikationsvorrichtung nach Anspruch 1, wobei der Hauptprozessor zum Umwandeln von Sprache in eine virtuelle Begleitperson ausgelegt ist, die auf der Anzeige angezeigt wird, die Videos von Gebärdensprachmustern oder Lippen anzeigt, die für die empfangene Sprache kennzeichnend sind.

8. Mobile drahtlose Kommunikationsvorrichtung nach Anspruch 1, ferner umfassend eine Kamera, die mit dem Hauptprozessor gekoppelt und zum Empfangen von Bildern eines Benutzers ausgelegt ist, der es einem Benutzer ermöglicht, Videos in Gebärdensprache zu übertragen.

9. Verfahren zur Kommunikation, umfassend: Empfangen an einer mobilen drahtlosen Kommunikationsvorrichtung eines Hochfrequenz-, HF- Signals, das Kommunikationsdaten von Sprache von einem anderen Benutzer, der eine Kommunikationsvorrichtung betreibt, enthält; Verarbeiten der Kommunikationsdaten von Sprache und Umwandeln der Sprache in Textdaten;
Anzeigen des Textes auf einer Anzeige der mobilen drahtlosen Kommunikationsvorrichtung;
als Antwort auf den angezeigten Text, der der Sprache des anderen Benutzers entspricht, wobei der Benutzer der mobilen drahtlosen Kommunikationsvorrichtung Text als Antwort eingibt;
Umwandeln des eingegebenen Textes in Kommunikationsdaten von Sprache;
Übertragen der Kommunikationsdaten von Sprache an den anderen Benutzer, der eine Kommunikationsvorrichtung betreibt; und
Auslegen eines Zusatzes eines Behindertenmoduls, das in der mobilen drahtlosen Kommunikationsvorrichtung enthalten ist, wobei der Zusatz mindestens ein Leuchtdioden-LED-Modul zum Ergänzen der Text-zu-Sprache/Sprach-zu-Text-Umwandlung umfasst, wobei das LED-Modul mit LEDs zusammenwirkt, die auf der Vorderseite der mobilen drahtlosen Kommunikationsvorrichtung angeordnet sind, wobei das Verfahren ferner umfasst:
Verarbeiten der Sprach-zu-Text-Umwandlung, um Lichter in einem Muster anzuzeigen, das für die empfangene Sprache kennzeichnend ist.

10. Verfahren nach Anspruch 9, und ferner umfassend das Zusammenwirken mit einem Anzeigebildschirm mit einer Behindertenoption zum Aktivieren der Umwandlung von Text in Sprache/Sprache in Text.

11. Verfahren nach Anspruch 9, und ferner umfassend das Drücken einer Taste beim Beantworten, die automatisch ein Signal als Kommunikationsdaten für Sprache erzeugt, das für eine Begrüßung kennzeichnend ist, und das Drücken einer Taste beim Beenden eines Anrufs, die automatisch ein Signal als Kommunikationsdaten für empfangene Sprache erzeugt, das für das Beenden eines Telefonanrufs kennzeichnend ist.

12. Verfahren nach Anspruch 9, und ferner umfassend das Anzeigen verschiedener Farben von den LEDs, die für empfangene Sprache kennzeichnend sind.

13. Verfahren nach Anspruch 9, ferner umfassend das Anzeigen einer virtuellen Begleitperson auf einem Anzeigebildschirm, der Gebärdensprachmuster oder Lippen anzeigt, die für empfangene Sprache kennzeichnend sind.

## Revendications

1. Dispositif mobile de communication sans fil, comprenant :
un émetteur-récepteur pour transmettre et recevoir des signaux de radiofréquence, RF, transportant des données de communication de message vocal ;
un processeur principal couplé à l'émetteur-récepteur pour traiter les données de communication sous forme vocale qui sont transmises et reçues par l'émetteur-récepteur ;
un clavier et un écran et connectés au processeur principal ;
un module de conversion de texte en message vocal ou de message vocal en texte pour convertir des données de communication sous forme de message vocal reçues de l'émetteur-récepteur en un texte affiché sur l'écran et convertir le texte saisi par un utilisateur au clavier en données de communication de message vocal devant être transmises depuis l'émetteur-récepteur par un signal RF ; et
un module de handicap comprenant un module complémentaire comprenant au moins un module de diodes électroluminescentes, DEL, connecté au processeur principal, configuré pour compléter la conversion de texte en message vocal et de message vocal en texte ; dans lequel le module de DEL interagit avec des DEL placées à l'avant du dispositif mobile de communication sans fil ; et dans lequel les DEL sont couplées au processeur principal et le processeur principal est agencé pour traiter la conversion du message vocal en texte afin d'afficher des lumières selon un motif indiquant le message vocal reçu.

2. Dispositif mobile de communication sans fil selon la revendication 1, dans lequel ledit dispositif d'affichage fournit une interface et ledit processeur est configuré pour afficher un écran de configuration ayant une option de handicap pouvant être sélectionnée par l'utilisateur pour activer le module de conversion de texte en message vocal ou de message vocal en texte.

3. Dispositif mobile de communication sans fil selon la revendication 1, et comprenant en outre un haut-parleur et couplé au processeur pour émettre sous forme de signal audio le message vocal contenu dans les données de communication reçues du message vocal en affichant en outre le message vocal reçu sous forme de texte sur le dispositif d'affichage.

4. Dispositif mobile de communication sans fil selon la revendication 1, et comprenant en outre une touche qui, lorsqu'elle est enfoncée par l'utilisateur, est configurée pour générer un signal en tant que données de communication pour un message vocal indiquant une salutation au début d'un appel téléphonique et une touche qui, lorsqu'elle est enfoncée, génère automatiquement un signal en tant que données de communication pour le message vocal pour indiquer la fin d'un appel téléphonique.

5. Dispositif mobile de communication sans fil selon la revendication 1, dans lequel ledit module de conversion de texte en message vocal ou de message vocal en texte comprend un circuit de traitement de texte en message vocal ou de message vocal en texte couplé au processeur principal.

6. Dispositif mobile de communication sans fil selon la revendication 1, dans lequel ledit module de conversion de texte en message vocal ou de message vocal en texte comprend une application coopérant avec un logiciel d'exploitation.

7. Dispositif mobile de communication sans fil selon la revendication 1, dans lequel ledit processeur principal est configuré pour convertir le message vocal en un opérateur virtuel affiché sur le dispositif d'affichage qui affiche une vidéo de motifs de langage de signes ou de mouvement des lèvres indiquant le message vocal reçu.

8. Dispositif mobile de communication sans fil selon la revendication 1, et comprenant en outre une caméra couplée au processeur principal et configurée pour recevoir des images d'un utilisateur permettant à un utilisateur de transmettre une vidéo en langage de signes.

9. Procédé de communication, comprenant :
la réception, sur un dispositif mobile de communication sans fil, d'un signal de radiofréquence, RF, transportant des données de communication de message vocal provenant d'un autre utilisateur exploitant un dispositif de communication ;
le traitement des données de communication du message vocal et la conversion du message vocal en données textuelles ;
l'affichage du texte sur un dispositif d'affichage du dispositif mobile de communication sans fil ;
en réponse au texte affiché correspondant au message vocal de l'autre utilisateur, la frappe du texte de réponse par l'utilisateur du dispositif mobile de communication sans fil ;
la conversion du texte tapé en données de communication de message vocal ;
la transmission des données de communication de message vocal à l'autre utilisateur exploitant un dispositif de communication ; et
la configuration d'un complément d'un module de handicap compris dans le dispositif mobile de communication sans fil,
le complément comprenant au moins un module de diodes électroluminescentes, DEL, pour compléter la conversion de texte en message vocal ou de message vocal en texte, dans lequel le module de DEL interagit avec des DEL placées à l'avant du dispositif mobile de communication sans fil, le procédé comportant en outre :
le traitement de la conversion du message vocal en texte pour afficher des lumières dans un motif indicatif du message vocal reçu.

10. Procédé selon la revendication 9, et comprenant en outre une interface avec un écran d'affichage ayant une option de handicap pour permettre la conversion de texte en message vocal ou de message vocal en texte.

11. Procédé selon la revendication 9, et comprenant en outre une pression sur une touche lors de la réponse qui génère automatiquement un signal en tant que données de communication pour un message vocal indiquant une salutation de début d'appel et une pression d'une touche lors de la fin d'un appel qui génère automatiquement un signal en tant que données de communication pour le message vocal reçu indiquant la fin d'un appel téléphonique.

12. Procédé selon la revendication 9, et comprenant en outre l'affichage de différentes couleurs à partir des DEL indiquant le message vocal reçu.

13. Procédé selon la revendication 9, et comprenant en outre l'affichage d'un assistant virtuel sur un écran d'affichage qui affiche des motifs de langage de signes ou de mouvement des lèvres indiquant le message vocal reçu.
